# EUROPEAN PATENT APPLICATION

(11) **EP 3 035 257 A1**
(43) Date of publication of application: **22.06.2016**
(21) Application number: 14460110.1
(22) Date of filing: 16.12.2014
(51) Int. Cl.: G06Q 10/06

(54) **METHOD OF SELF-ASSESSMENT OF ENABLERS AND RESULTS IN CAF MODEL**

(71) Applicant: Opegieka Sp. z o.o., 82-300 Elblag (PL)
(72) Inventor: Czkuj, Slawomir, 82-300 Elblag (PL)

(57) **Abstract**

The method of self-assessment of enablers and results includes a mechanism for calculating the final score of CAF criteria based on tree structure of criteria, and score for each phase of the PDCA cycle. This method allows the calculation of an overall score based on the detailed scores of criteria components (sub-criteria and evidence) and taking into account the existence of multiple scores (many groups scoring the same sub-criteria and examples).

## Description

The subject of the invention is a method of self-assessment of enablers and results based on the CAF (*Common Assessment Framework*) model in the field of technology: computer science. This method allows to self-assess enablers and results of a public benefit organization based on the CAF model. The invention relates to a way and method of self-assessment of enablers and results as well as calculating point results in each of the self-assessment criteria. This makes it possible to make an accurate self-assessment of an organization and finding its strengths and weaknesses.

The introduction of ISO standards and dissemination of quality management systems resulted in an increased need to properly identify improvement areas for the public benefit organizations. In 2000 EIPA (*European Institute of Public Administration*) introduced the CAF (*Common Assessment Framework*) model for the self-assessment of public sector institutions. This model divides the areas of operation of any public sector-organization into 9 main criteria and 28 sub-criteria, which are then further divided into individual examples of activities. Thanks to the CAF model it becomes possible to assess specific areas of the organization and to find improvement areas. The disadvantage of this model is its high complexity, which makes the manual counting of individual criteria scoring error prone. To facilitate the process of self-assessment several tools were produced to help carrying out the CAF process. The first tool is Self-Assessment e-Tool developed by EIPA and available at http://www.eipa.eu/en/pages/show/&tid=72. This tool does not allow user to go through the entire CAF self-assessment process and is intended only to assist the self-assessment. It enables the collection of evidence by self-assessment groups as well as manual entry of individual criteria scores. The tool is available to all registered users. Another tool is the NOR-STA system developed by the Technical University of Gdansk available at http://www.nor-sta.eu/. This system supports in particular the collection of management documentation databases, but also allows a coarse, subjective scoring of the found evidence, however, it lacks the basic functionality of the CAF model, which is the PDCA (*Plan-Do-Check-Act*) cycle. The third tool that exists on the market is CAFaid, which was developed by the consulting company F5 Consulting from Poznan, Poland. Unfortunately, the tool has not been done with due diligence to the CAF model and has not found wider application.

The invention relates to a method of making self-assessment of enablers and results based on the CAF model. Particularly innovative is the system of scoring of examples and assisting the final scoring of each criteria. The invention assumes that the tree structure consistent with CAF model has been created in the application: 9 criteria (5 enablers criteria 5 and 4 results criteria) at the first level of the tree, 28 sub-criteria on the second level of the tree and 254 examples on the third level of the tree. According to the CAF model one should walk through the entire tree of self-assessment in accordance with the principle from the particular to the general for each user:
1. Addition of evidence for each example (the number from 0 to *n* evidence for each example) within the particular phase of PDCA cycle.
2. Individual assessment of each phase of the PDCA cycle of each example according to the amount of collected evidence for a given phase (the more evidence for a given phase, the higher the score). For simplicity one of the six score ranges (0-10, 11-30, 31-50, 51-70, 71-90, 91-100) is selected for each phase. In the absence of evidence in an example, the only possible score range to select is 0-10.
3. Chairmen of groups (minimum 1, maximum 5 groups) assess each of the individual sub-criteria basing on the scoring of assessors. Chairmen score every phase of the PDCA cycle of each sub-criterion basing on scores of their subordinate assessors. Scoring is done by selecting the number in the range of 0-100 separately for each phase of the PDCA basing on the matrix representing selected by the assessors score ranges of examples belonging to each sub-criterion. The maximum score of the PDCA phase is bounded above by the highest score range assigned by the assessor, ie. The assessment sub-criterion score cannot be higher than the highest score of any of the examples belonging to this sub-criterion. In the absence of evidence in a particular phase of the PDCA the only possible score is 0, which is a score assigned automatically by the system. The result of this stage are separate scores of each of the groups for all phases of the PDCA for all sub-criteria.
4. Coordinator, basing on scores assigned by groups in each sub-criterion, sets the final scores of sub-criteria (Summary Self-Assessment). For each sub-criterion a suggested score is calculated based on the evaluation of scores of all phases of the PDCA cycle set by all groups - it is the cumulative score, not divided into particular phases. Suggested score is not final - the coordinator must enter the final score on his own, which may differ from the suggested score.
5. After scoring all of sub-criteria the system calculates the criteria score using the arithmetic average of all scores of subordinate sub-criteria. This score is not editable, is in the range of 0-100 points, and based on this score it can be easily seen which criteria are strengths and which are the areas for improvement.

This method of calculating final scores should be used periodically (according to the CAF model every 2 years) so that the results will indicate progress or regression in particular self-assessment criteria.

Essential elements for this invention are: a database for storing the collected evidence and scores and Web application that contains the user interface that implements the above method of self-assessment of enablers and results.

The use of this invented method of self-assessment of enablers and results brings many benefits to users. From the perspective of the end user the self-assessment process is completely transparent and does not require the user to familiarize himself with the complex CAF model. At one point the end user receives one simple task (eg. Adding evidence, example scoring etc.). For a user who is the Chairman of self-assessment group the benefits are even greater - he does not have to worry about the large amount of data that must be analysed in order to score sub-criteria - the invented system does it for him, showing only a visual representation of the data, based on which it is much easier to issue a score. The Coordinator receives the final scores, which he can accept or modify. For the Organization the benefits are even more noticeable: the self-assessment process is fully repeatable, so at each iteration it is possible to control the results and base on them while taking appropriate measures aimed at improving the work of the public benefit organization.

The invention has been developed and implemented in Applicant's web-based system "CAFaaS" that is as a result of research and development project: "Research on the use of Cloud Computing technology for self-certification based on CAF model." The method of self-assessment of enablers and results is a key mechanism of the CAFaaS system, which is used to carry out a self-assessment according to the CAF model, and allows subsequent improvement of areas identified as weaknesses by the invented method. Thanks to the invented method, it is possible to perform periodic self-assessments and receive consistent and reliable results.

## Claims

1. The method of calculating the self-assessment of CAF criteria which is based on a tree structure (criterion → sub-criterion → example → evidence) with separated scores of each PDCA cycle phase.

2. The mechanism of calculating the final score on the basis of particular scores (from particular to general method): scoring of example → scoring of sub-criterion → scoring of criterion.

3. The method of calculating final score in the case of multiple groups (many scores of the same sub-criterion).
